# EUROPÄISCHE PATENTSCHRIFT

(11) **EP 2 337 618 B1**
(45) Veröffentlichungstag und Bekanntmachung des Hinweises auf die Patenterteilung: **16.01.2013**
(21) Anmeldenummer: 09782101.1
(22) Anmeldetag: 24.08.2009
(51) Int. Cl.: B01D 35/153, B01D 29/15, B01D 29/23, B01D 29/96

(54) **FILTEREINRICHTUNG**
FILTER DEVICE
DISPOSITIF FILTRANT

(30) Priorität: 10.10.2008 DE 102008051266
(43) Veröffentlichungstag der Anmeldung: 29.06.2011
(73) Patentinhaber: MAHLE International GmbH, 70376 Stuttgart (DE)
(72) Erfinder: DUNSCH, Robert, 71665 Vaihingen (DE); GEBLER, Claude Frédéric, 70469 Stuttgart (DE)
(74) Vertreter: BRP Renaud & Partner
(86) Internationale Anmeldenummer: PCT/EP2009/060857
(87) Internationale Veröffentlichungsnummer: WO 2010/040594

(56) Entgegenhaltungen:
- WO-A-00/21640
- DE-A1- 4 310 492
- DE-T2- 60 124 331
- DE-U1- 20 213 512
- US-A1- 2001 042 709
- US-A1- 2002 014 452

## Beschreibung

Die vorliegende Erfindung betrifft eine Filtereinrichtung, insbesondere einen Öl - oder Kraftstofffilter in einem Kraftfahrzeug, gemäß dem Oberbegriff des Anspruchs 1.

Bei modernen Filtereinrichtungen müssen in vorgegebenen Wartungsintervallen die darin eingesetzten Filterelemente, bspw. Ringfilterelemente, ausgetauscht und erneuert werden. Hierzu muss ein Gehäuse der Filtereinrichtung geöffnet und das darin angeordnete Filterelement entnommen bzw. ausgetauscht werden. Ein Öffnen des Filtergehäuses birgt dabei jedoch stets die Gefahr, dass innerhalb des Filtergehäuses vorhandener Kraftstoff bzw. Öl unkontrolliert nach außen gelangt und dadurch eine Umgebung verschmutzt. Dies muss unbedingt vermieden werden.

Aus der DE 11 2006 001 365 T5 ist eine gattungsgemäße Filtereinrichtung bekannt, die ein Filtergehäuse und einen damit verschraubbaren Filtergehäusedeckel aufweist. Im Filtergehäuse ist dabei ein Filterelement, insbesondere ein Ringfilterelement, angeordnet, welches eine obere und eine untere Endscheibe aufweist.

Die Erfindung beschäftigt sich mit dem Problem, für eine gattungsgemäße Filtereinrichtung eine verbesserte oder zumindest eine andere Ausführungsform anzugeben.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, an einer oberen Endscheibe eines in einem Filtergehäuse angeordneten Filterelementes zumindest einen radial überstehenden Umfangsabschnitt vorzusehen, der in eine komplementär dazu ausgebildete und an einem Filtergehäusedeckel vorgesehene Ringnut eingreift und zwar derart, dass bei einer Verdrehung des Filtergehäusedeckels relativ zum Filtergehäuse bzw. relativ zum Filterelement der wenigstens eine Umfangsabschnitt in der Ringnut gleitet und gleichzeitig eine Axialverstellung des Filterelementes bewirkt. Hierdurch kann eine besonders einfache Montage und Demontage des Filterelementes aus dem Filtergehäuse der Filtereinrichtung, beispielsweise zu Wartungszwecken, erreicht werden. Die gleitende Anordnung des zumindest einen Umfangsabschnitts der oberen Endscheibe in der zugehörigen Ringnut, ermöglicht ein Verdrehen des Filtergehäusedeckels und damit ein Aufschrauben desselben auf das Filtergehäuse, wobei während des Auf- bzw. Abschraubens das im Filtergehäuse angeordnete Filterelement lediglich axial verstellt, nicht jedoch verdreht wird. Dies ermöglicht es beispielsweise, dass ein an einer unteren Endscheibe des Filterelementes angeordnetes, axial abstehendes Verschlusselement beim Aufschrauben des Filtergehäusedeckels auf das Filtergehäuse in einen an einem Filtergehäuseboden vorgesehenen Leerlauf eingeschoben und beim Abschrauben des Filtergehäuses wieder aus diesem entfernt wird, so dass ein zuverlässiges Entleeren des Filtergehäuses möglich ist, bevor der Filtergehäusedeckel gänzlich abgenommen werden kann.

Bei einer vorteilhaften Weiterbildung der erfindungsgemäßen Lösung, sind an der oberen Endscheibe des Filterelementes vier radial überstehende Umfangsabschnitte angeordnet, die vorzugsweise in Umfangsrichtung gleichmäßig verteilt sind, und welche zusätzlich elastisch, insbesondere brückenartig, ausgebildet sind. Eine derartig ausgebildete obere Endscheibe lässt sich fertigungstechnisch einfach und dadurch kostengünstig herstellen, wobei die elastisch ausgebitdeten Umfangsabschnitte eine radiale Verstellmöglichkeit von zumindest 0,5 mm, vorzugsweise 0,7 mm, ermöglichen. Hierdurch lässt sich die obere Endscheibe mit deren Umfangsabschnitte einerseits leicht in die zugehörige Ringnut am Filtergehäusedeckel eindrücken, wobei jedoch ein Lösewiderstand so hoch ist, dass durch die Umfangsabschnitte die axiale Verstellbewegung des Filterkörpers beim Auf- bzw. Abschrauben des Filtergehäusedeckels zuverlässig gewährleistet werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Filtereinrichtung zu Beginn eines Abschraubvorgangs eines Filtergehäusedeckels,
- Fig. 2: eine Darstellung wie in Fig. 1, jedoch bei weiter gelöstem Filtergehäusedeckel,
- Fig. 3: eine Darstellung bei komplett vom Filtergehäuse gelösten bzw. abgeschraubten Filtergehäusedeckel,
- Fig. 4: eine mögliche Ausführungsform einer erfindungsgemäßen oberen Endscheibe,
- Fig. 5: eine Schnittdarstellung durch die Ebene der oberen Endscheibe zur Verdeutlichung deren Eingriff in die filtergehäusedeckelseitige Ringnut,
- Fig. 6: eine Schnittdarstellung im Bereich der oberen Endscheibe.

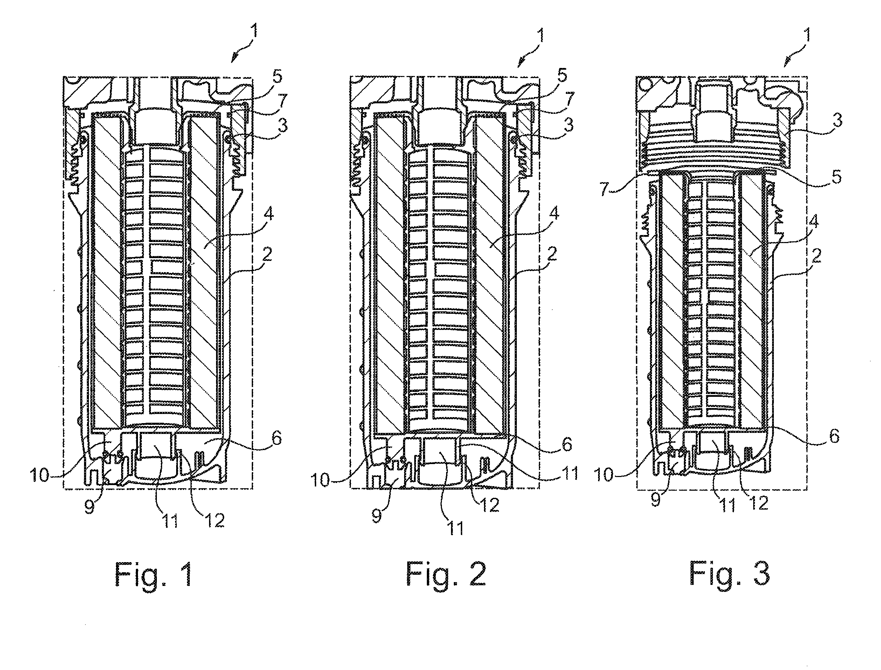

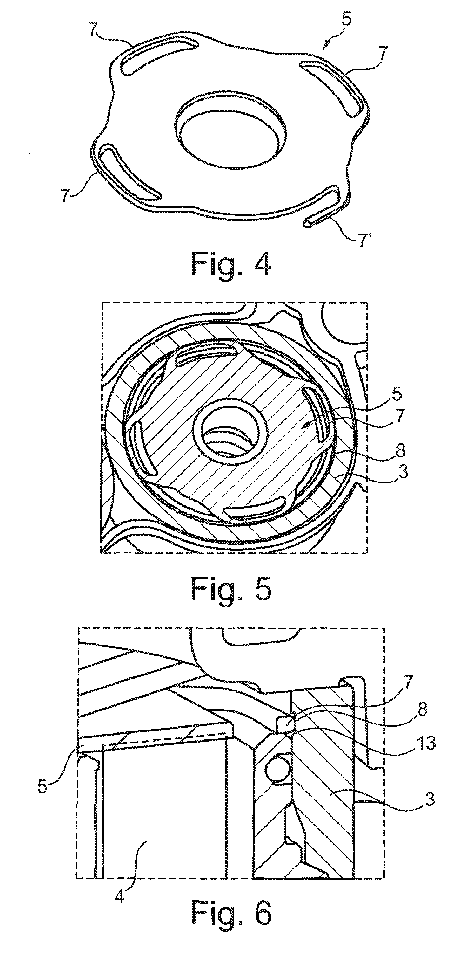

Entsprechend den Fig. 1 bis 3, weist eine erfindungsgemäße Filtereinrichtung 1, welche insbesondere als Öl- oder Kraftstofffilter in einem Kraftfahrzeug ausgebildet sein kann, ein Filtergehäuse 2 sowie einen damit verschraubbaren Filtergehäusedeckel 3 auf. Im Filtergehäuse 2 ist ein Filterelement 4, insbesondere ein Ringfilterelement, angeordnet, welches üblicherweise von einer oberen Endscheibe 5 und einer unteren Endscheibe 6 axial begrenzt und in Radialrichtung durchströmt ist. Die obere Endscheibe 5 ist dabei gemäß der Fig. 4 noch mal explizit in einer Ansicht dargestellt.

Erfindungswesentlich ist nun, dass an der oberen Endscheibe 5 zumindest ein radial überstehender Umfangsabschnitt 7, gemäß den Fig. 4 und 5 insgesamt vier Umfangsabschnitte 7, angeordnet sind, während am Filtergehäusedeckel 3 ein komplementär zu dem bzw. zu den Umfangabschnitten 7 der oberen Endscheibe 5 ausgebildete Ringnut 8 vorgesehen ist (vgl. insbesondere Fig. 6). In diese Ringnut 8 greifen die radial überstehende Umfangsabschnitte 7 ein und sind derart darin geführt, dass sie bei einer Verdrehung des Filtergehäusedeckels 3 in der Ringnut 8 gleiten und gleichzeitig eine Axialverstellung des Filterelementes 4 bewirken.

Am Filtergehäuseboden ist darüber hinaus ein Leerlauf 9 vorgesehen, welcher von einem an der unteren Endscheibe 6 axial abragenden Verschlusselement 10 verschlossen ist, sofern sich das Filterelement 4 in seiner Einbaulage befindet. Gemäß der Fig. 1 ist dabei der Filtergehäusedeckel 3 bereits soweit abgedreht, dass das Verschlusselement 10 aus dem Leerlauf 9 herausgezogen ist und diesen dadurch öffnet, so dass noch im Filtergehäuse 2 vorhandenes Fluid über den Leerlauf 9 abfließen kann. Die Fig. 1 entspricht dabei in etwa einer Axialverschiebung des Filterelementes 4 um 9 mm.

Darüber hinaus ist an der unteren Endscheibe 6 ein zentral abstehender Axialstutzen 11 vorgesehen, welcher über eine Rastverbindung 12 mit dem Filtergehäuseboden verrastet ist. Diese Rastverbindung 12 weist dabei üblicherweise einen höheren Lösewiderstand auf, als der wenigstens eine in die Ringnut 8 eingreifende Umfangsabschnitt 7 der oberen Endscheibe 5, so dass bei einem Abschrauben des Filtergehäusedeckels 3 vom Filtergehäuse 2 zunächst der Umfangsabschnitt 7 aus der Ringnut 8 gelöst wird, bevor die Rastverbindung 12 gelöst wird. Dabei kann der Axialstutzen 11 beispielsweise als Zu- oder als Ablauf ausgebildet sein.

Die Fig. 2 zeigt einen Zustand, bei welchem der Filtergehäusedeckel 3 im Vergleich zur Fig. 1 weiter abgedreht ist und das Filterelement 4 um ca. 13 mm in Axialrichtung, das heißt hier nach oben, verstellt wurde. Bei diesem Verstellweg von ca. 13 mm, greift die untere Rastverbindung 12 und verhindert zunächst ein weiteres Anheben des Filterelementes 4, so dass bei einem weiteren Abschrauben des Filtergehäusedeckels 3 vom Filtergehäuse 2 nunmehr die Umfangsabschnitte 7 aus der Ringnut 8 gelöst werden. Ein vollständig vom Filtergehäuse 2 gelösten Filtergehäusedeckel 3 zeigt beispielsweise die Fig. 3. Bereits bei dem in Fig. 1 gezeigten Zustand, ist jedoch der Leerlauf 9 nicht mehr vom Verschlusselement 10 verschlossen, so dass bereits ab einem axialen Verstellweg von ca. 9 mm ein Abfließen des noch im Filtergehäuse 2 verbliebenen Fluids erfolgen kann, so dass bei einem Abnehmen des Filtergehäusedeckels 3 vom Filtergehäuse 2, wie dies beispielsweise gemäß der Fig. 3 dargestellt ist, kein ungewolltes Austreten von Filterfluid nach außen und damit eine Kontamination der Umgebung, befürchtet werden muss.

Der wenigstens eine Umfangsabschnitt 7 ist dabei in Radialrichtung elastisch, insbesondere brückenartig, ausgebildet und erlaubt eine Radialverstellung von zumindest 0,5 mm, vorzugsweise von sogar 0,7 mm. Denkbar ist dabei, dass der wenigstens eine Umfangsabschnitt 7 nicht als geschlossene Brücke, sondern beispielsweise L-förmig abstehend ausgebildet ist. Ein derartig L-förmig abstehender Umfangsabschnitt ist dabei gemäß der Fig. 7 mit dem Bezugszeichen 7' dargestellt, wobei selbstverständlich denkbar ist, dass lediglich Umfangsabschnitte 7' oder aber beide Arten von Umfangsabschnitten 7 und 7' an der Endscheibe 5 vorgesehen sind.

Gemäß der Fig. 4 kann eine untere Kante 13 der Ringnut 8 gefast, das heißt abgewinkelt, ausgebildet sein, um damit direkt Einfluss auf einen Lösewiderstand der Umfangsabschnitte 7 aus der Ringnut 8 nehmen zu können.

Mit der erfindungsgemäßen Endscheibe 5 ist es somit möglich, das Filterelement 4 relativ zum Filtergehäusedeckel 3 drehbar zu lagern, jedoch eine Axialmitnahme des Filterelementes 4 durch den Filtergehäusedeckel 3 zu erzwingen, zumindest solange, dass die Rastverbindung 12 greift. Aufgrund des geringeren Lösewiderstandes der Umfangsabschnitte 7, 7' aus der Ringnut 8, erfolgt dann ein problemloses Abnehmen des Filtergehäusedeckels 3 vom Filtergehäuse 2, ohne dass dabei das Filterelement 4 aus dem Filtergehäuse 2 entnommen wird. Dieses kann erst nach dem Überwinden des Lösewiderstands der Rastverbindung 12 aus dem Filtergehäuse 2 entnommen werden. Die erfindungsgemäße Endscheibe 5 ist dabei kostengünstig und fertigungstechnisch einfach herzustellen, ebenso wie eine in dem Filtergehäusedeckel 3 vorzusehende komplementär dazu ausgebildete Ringnut 8. Die obere Endscheibe 5 kann dabei ebenso wie die untere Endscheibe 6 als kostengünstiges Kunststoffteil ausgebildet werden.

## Patentansprüche

1. Filtereinrichtung (1), insbesondere ein Öl- oder Kraftstofffilter in einem Kraftfahrzeug, mit einem Filtergehäusedeckel (3) und einem damit verschraubbaren Filtergehäuse (2), in welchem ein Filterelement (4), insbesondere ein Ringfilterelement angeordnet ist, wobei das Filterelement (4) eine obere Endscheibe (5) und eine untere Endscheibe (6) aufweist,
**dadurch gekennzeichnet,**
- **dass** an der oberen Endscheibe (5) zumindest ein radial überstehender Umfangsabschnitt (7,7')angeordnet ist,
- **dass** am Filtergehäusedeckel (3) eine komplementär zum Umfangsabschnitt (7,7') der oberen Endscheibe (5) ausgebildete Ringnut (8) vorgesehen ist, in welche der wenigstens eine Umfangsabschnitt (7,7') der oberen Endscheibe (5) eingreift und derart geführt ist, dass bei einer Verdrehung des Filtergehäusedeckels (3) der wenigstens eine Umfangsabschnitt (7,7') in der Ringnut (8) gleitet und gleichzeitig eine Axialverstellung des Filterelementes (4) bewirkt.

2. Filtereinrichtung nach Anspruch 1
**dadurch gekennzeichnet,**
**dass** in einem Filtergehäuseboden ein Leerlauf (9) vorgesehen ist, der von einem an der unteren Endscheibe (6) axial abragenden Verschlusselement (10) verschlossen ist, sofern das Filterelement (4) in seiner Einbaulage befindet.

3. Filtereinrichtung nach Anspruch 1 oder 2,
**dadurch gekennzeichnet,**
**dass** an der oberen Endscheibe (5) vier radial überstehende Umfangsabschnitte (7,7') angeordnet sind.

4. Filtereinrichtung nach Anspruch 1 oder 2,
**dadurch gekennzeichnet,**
**dass** der wenigstens eine Umfangsabschnitt (7,7') in Radialrichtung elastisch, insbesondere brückenartig, ausgebildet ist.

5. Filtereinrichtung nach einem der Abschnitte 1 bis 4,
**dadurch gekennzeichnet,**
**dass** der wenigstens eine Umfangsabschnitt (7') L-förmig ausgebildet ist.

6. Filtereinrichtung nach einem der Ansprüche 1 bis 5,
**dadurch gekennzeichnet,**
**dass** an der unteren Endscheibe (6) ein zentraler Axialstutzen (11) absteht, der über eine Rastverbindung (12) mit dem Filtergehäuseboden verrastet ist, wobei die Rastverbindung (12) einen höheren Lösewiderstand aufweist, als der wenigstens eine in die Ringnut (8) eingerastete Umfangsabschnitt (7,7') der oberen Endscheibe (5).

7. Filtereinrichtung nach Anspruch 6,
**dadurch gekennzeichnet,**
**dass** der Axialstutzen (11) als Zulauf oder als Ablauf ausgebildet ist.

8. Filtereinrichtung nach einem der Ansprüche 1 bis 7,
**dadurch gekennzeichnet,**
**dass** eine untere Kante (13) der Ringnut (8) gefast ausgebildet ist.

## Claims

1. A filter device (1), in particular an oil or fuel filter in a motor vehicle, having a filter housing cover (3) and filter housing (2) which can be screwed together with said filter housing cover and in which a filter element (4), in particular a ring filter element, is arranged, wherein the filter element (4) comprises an upper end disk (5) and a lower end disk (6), **characterized in**
- **that** on the upper end disk (5) at least one radially protruding circumferential section (7, 7') is arranged,
- **that** on the filter housing cover (3) a ring groove (8) is provided which is formed complementary to the circumferential section (7, 7') of the upper end disk (5) and in which the at least one circumferential section (7, 7') of the upper end disk (5) engages and is guided in such a manner that during a rotation of the filter housing cover (3), the at least one circumferential section (7, 7') slides in the ring groove (8) and, at the same time, effects an axial displacement of the filter element (4).

2. The filter device according to claim 1,
**characterized in that**
in a filter housing bottom, a drain chamber (9) is provided which is closed by a closure element (10)
axially protruding on the lower end disk (6), provided that the filter element (4) is in its mounted position.

3. The filter device according to claim 1 or claim 2,
**characterized in**
**that** on the upper end disk (5), four radially protruding circumferential sections (7, 7') are arranged.

4. The filter device according to claim1 or claim 2,
**characterized in**
**that** the at least one circumferential section (7, 7') is formed to be elastic in the radial direction, in particular in a bridge-like manner.

5. The filter device according to any one of the claims 1 to 4,
**characterized in**
**that** the at least one circumferential section (7') is formed in an L-shaped manner.

6. The filter device according to any one of the claims 1 to 5,
**characterized in**
**that** on the lower end disk (6), a central axial nozzle (11) protrudes which is latched via a latching connection (12) with the filter housing bottom, wherein the latching connection (12) has a higher detaching resistance than the at least one circumferential section (7, 7') of the upper end disk (5), which circumferential section is latched into the ring groove (8).

7. The filter device according to claim 6,
**characterized in**
**that** the axial nozzle (11) is formed as inlet or as outlet.

8. The filter device according to any one of the claims 1 to 7,
**characterized in**
**that** a lower edge (13) of the ring groove (8) is formed in a chamfered manner.

## Revendications

1. Dispositif filtrant (1), notamment filtre à huile ou à carburant dans un véhicule automobile, comportant un couvercle de logement de filtre (3) et un logement de filtre (2) qui peut être vissé à celui-ci, dans lequel un élément filtrant (4), notamment un élément filtrant annulaire est disposé, dans lequel l'élément filtrant (4) présente une rondelle d'extrémité supérieure (5) et une rondelle d'extrémité inférieure (6), **caractérisé en ce que**
- sur la rondelle d'extrémité supérieure (5) au moins une portion circonférentielle (7,7') en saillie radiale est disposée,
- sur le couvercle de logement de filtre (3)une rainure annulaire (8) conçue de manière complémentaire à la portion circonférentielle (7,7') de la rondelle d'extrémité supérieure (5) est prévue, dans laquelle au moins une rainure circonférentielle (7,7') de la rondelle d'extrémité supérieure (5) s'engage et est guidée de telle sorte que lors d'une torsion du couvercle de logement de filtre (3), au moins une portion circonférentielle (7,7') coulisse dans la rainure annulaire (8) et provoque simultanément un déplacement axial de l'élément filtrant (4).

2. Dispositif filtrant selon la revendication 1,
**caractérisé en ce que**
dans une base du logement de filtre un canal à vide (9) est prévu, qui est obturé par un élément d'obturation (10) dépassant axialement sur la rondelle d'extrémité inférieure (6), dès lors que l'élément filtrant (4) se trouve dans sa position de montage.

3. Dispositif filtrant selon les revendications 1 ou 2,
**caractérisé en ce que**
quatre portions circonférentielles (7,7') en saillie radiale sont disposée sur la rondelle d'extrémité supérieure (5).

4. Dispositif filtrant selon les revendications 1 ou 2,
**caractérisé en ce que**
au moins une portion circonférentielle (7,7') est conçue de manière élastique dans la direction radiale, notamment en forme de pont.

5. Dispositif filtrant selon une des revendications 1 à 4,
**caractérisé en ce que**
au moins une portion circonférentielle (7') est conçue en forme de L.

6. Dispositif filtrant selon une des revendications 1 à 5,
**caractérisé en ce que**
sur la rondelle d'extrémité inférieure (6), un embout axial central (11) dépasse en saillie, lequel s'encliquète par l'intermédiaire d'une liaison par encliquetage (12) avec la base du logement de filtre, dans lequel la liaison par encliquetage (12) présente une plus grande résistance au desserrage que au moins une portion circonférentielle (7,7') de la rondelle d'extrémité supérieure (5) encliquetée dans la rainure annulaire (8).

7. Dispositif filtrant selon la revendication 6,
**caractérisé en ce que**
l'embout axial (11) est conçu comme un canal d'amenée ou un canal d'évacuation.

8. Dispositif filtrant selon une des revendications 1 à 7,
**caractérisé en ce que**
une arête inférieure ( 13 ) de la rainure annulaire (8) est conçue de manière sertie.
